# FASCICULE DE BREVET EUROPEEN

(11) **EP 1 282 535 B1**
(45) Date de publication et mention de la délivrance du brevet: **01.04.2009**
(21) Numéro de dépôt: 01936507.1
(22) Date de dépôt: 14.05.2001
(51) Int. Cl.: B60H 1/32, B60H 1/00

(54) **PROCEDE ET DISPOSITIF DE REGULATION THERMIQUE D'UN HABITACLE DE VEHICULE AUTOMOBILE**
VORRICHTUNG UND VERFAHREN ZUR KLIMATISIERUNG DES INNENRAUMS VON KRAFTFAHRZEUGEN
TEMPERATURE CONTROL METHOD AND DEVICE IN A MOTOR VEHICLE PASSENGER COMPARTMENT

(30) Priorité: 15.05.2000 FR 0006116; 28.11.2000 FR 0015363
(43) Date de publication de la demande: 12.02.2003
(73) Titulaire: Peugeot Citroën Automobiles SA, 92200 Neuilly sur Seine (FR); Visteon Global Technologies, Inc., Dearborn, Michigan 48126-2490 (US)
(72) Inventeur: AMARAL, Manuel, F-94400 Vitry-sur-Seine (FR); VOUZELAUD, Franck, F-75014 Paris (FR)
(74) Mandataire: de la Bigne, Guillaume Michel Marie
(86) Numéro de dépôt international: PCT/FR2001/001457
(87) Numéro de publication internationale: WO 2001/087655

(56) Documents cités:
- DE-A- 19 930 148
- US-A- 5 265 437
- US-A- 5 421 169

## Description

La présente invention concerne un procédé et un dispositif de régulation thermique d'un habitacle de véhicule automobile.

On connaît déjà dans l'état de la technique, notamment d'après FR-2 697 210, un procédé de régulation thermique d'un habitacle de véhicule automobile, du type dans lequel on apporte à l'habitacle des calories provenant d'une source chaude d'une pompe à chaleur comportant un circuit de fluide frigorigène à compression prélevant des calories d'une source froide pour les transférer au moins partiellement vers la source chaude.

Le circuit à compression comprend habituellement un évaporateur, en échange thermique avec la source froide, et un condenseur, en échange thermique avec la source chaude, ces éléments étant raccordés entre eux par un compresseur et un détendeur. Le fluide frigorigène se vaporise dans l'évaporateur en enlevant de la chaleur à la source froide. Le compresseur aspire le fluide frigorigène vaporisé et le refoule dans le condenseur refroidi (par échange thermique avec la source chaude) dans lequel il se condense. Le détendeur laisse passer le fluide frigorigène liquide vers l'évaporateur en abaissant sa pression.

Une pompe à chaleur peut être utilisée soit pour chauffer un espace ou un organe soit pour refroidir cet espace ou cet organe.

Dans FR-2 697 210, d'une part, la source froide comporte un premier échangeur thermique fluide frigorigène/liquide caloporteur couplant thermiquement le circuit de fluide frigorigène, formant un circuit principal, à un premier circuit secondaire de liquide caloporteur et, d'autre part, la source chaude comporte un second échangeur thermique fluide frigorigène/liquide caloporteur couplant thermiquement le circuit principal de fluide frigorigène à un second circuit secondaire de liquide caloporteur.

Les circuits secondaires peuvent être raccordés sélectivement, par l'intermédiaire de vannes appropriées, à un échangeur thermique extérieur, placé dans le compartiment moteur du véhicule, et à un échangeur thermique intérieur, placé dans l'habitacle du véhicule. En agissant sur les vannes, on peut utiliser la pompe à chaleur soit pour réfrigérer l'habitacle d'un véhicule (dans ce premier cas, la source chaude est l'échangeur thermique extérieur et la source froide est l'échangeur thermique intérieur), soit pour réchauffer l'habitacle (dans ce second cas, la source chaude est l'échangeur thermique intérieur et la source froide est l'échangeur thermique extérieur).

On notera dans ce dernier cas que les performances de la pompe à chaleur sont limitées par la température de l'air extérieur. En effet, en saison froide, la température de l'air limite le rendement de la pompe à chaleur, lorsque celle-ci est utilisée à des fins de chauffage de l'habitacle. Par ailleurs, le givrage de la source froide en saison froide peut nuire aux performances de fonctionnement de la pompe à chaleur.

L'invention a pour but d'optimiser les performances d'un dispositif de régulation thermique à pompe à chaleur notamment lorsqu'il est utilisé pour réchauffer l'habitacle d'un véhicule automobile.

FR 2 697 210A décrit un dispositif de régulation thermique pour véhicule automobile, du type comprenant :
- une pompe à chaleur comportant un circuit principal de fluide frigorigène à compression prélevant des calories d'une source froide pour les transférer vers une source chaude,
- la source froide comportant un premier échangeur thermique fluide frigorigène/liquide caloporteur couplant thermiquement le circuit principal de fluide frigorigène à un premier circuit secondaire de liquide caloporteur pouvant être raccordé sélectivement à au moins deux échangeurs thermiques,
- la source chaude comportant un second échangeur thermique fluide frigorigène/liquide caloporteur couplant thermiquement le circuit principal de fluide frigorigène à un second circuit secondaire de liquide caloporteur pouvant être raccordé sélectivement à au moins deux échangeurs thermiques,
**caractérisé en ce que** le premier circuit secondaire peut être raccordé sélectivement à un échangeur thermique dit extérieur et un échangeur thermique dit froid, en ce que le second circuit secondaire peut être raccordé sélectivement à l'échangeur extérieur et un échangeur thermique dit chaud, **et en ce que** le dispositif comporte en outre un groupe de climatisation comprenant des moyens de raccordement d'une entrée d'air recyclé de l'habitacle, dite entrée d'air recyclé, à l'amont de l'échangeur froid.

Suivant d'autres caractéristiques de ce dispositif :
- les échangeurs froid et chaud sont des échangeurs liquide caloporteur/air ;
- les échangeurs froid et chaud sont agencés dans le groupe de climatisation, disposé de préférence dans l'habitacle, délimitant des circuits de flux d'air traversant ces échangeurs froid et chaud comprenant l'entrée d'air recyclé;
- les circuits de flux d'air comprennent une sortie d'air vers l'extérieur du véhicule, dite sortie extérieure, et des deuxièmes moyens de raccordement de l'aval de cet échangeur froid à la sortie extérieure ;
- les deuxièmes moyens de raccordement comprennent des moyens de répartition d'air vers l'amont de l'échangeur chaud et la sortie extérieure ;
- les circuits de flux d'air comprennent une entrée d'air extérieur au véhicule, dite entrée d'air extérieur, une sortie d'air vers l'habitacle, dite sortie habitacle, des troisièmes moyens de raccordement de l'entrée d'air extérieur à l'amont de l'échangeur chaud et des quatrièmes moyens de raccordement de l'aval de l'échangeur chaud à la sortie habitacle ;
- les troisièmes moyens de raccordement comprennent des moyens de répartition d'air vers l'amont de l'échangeur chaud et l'amont de l'échangeur froid ;
- le groupe de climatisation comprend des moyens d'entraînement d'air agencés en amont ou en aval de l'échangeur froid ;
- le groupe de climatisation comprend des moyens d'entraînement d'air agencés en amont ou en aval de l'échangeur chaud.

L'invention sera mieux comprise à la lecture de la description qui va suivre, donnée uniquement à titre d'exemple et faite en se référant aux dessins dans lesquels :
- les figures 1 à 3 sont des vues schématiques, dans trois configurations d'utilisation différentes respectivement, d'un dispositif de régulation thermique pour véhicule automobile selon l'invention;
- la figure 4 est une vue schématique d'un groupe de climatisation pour le dispositif illustré sur les figures précédentes ;
- la figure 5 est un schéma fonctionnel des flux d'air traversant le groupe de climatisation représenté sur la figure 4 ;
- les figures 6 et 7 sont des variantes de réalisation de le groupe de climatisation représenté sur la figure 4.

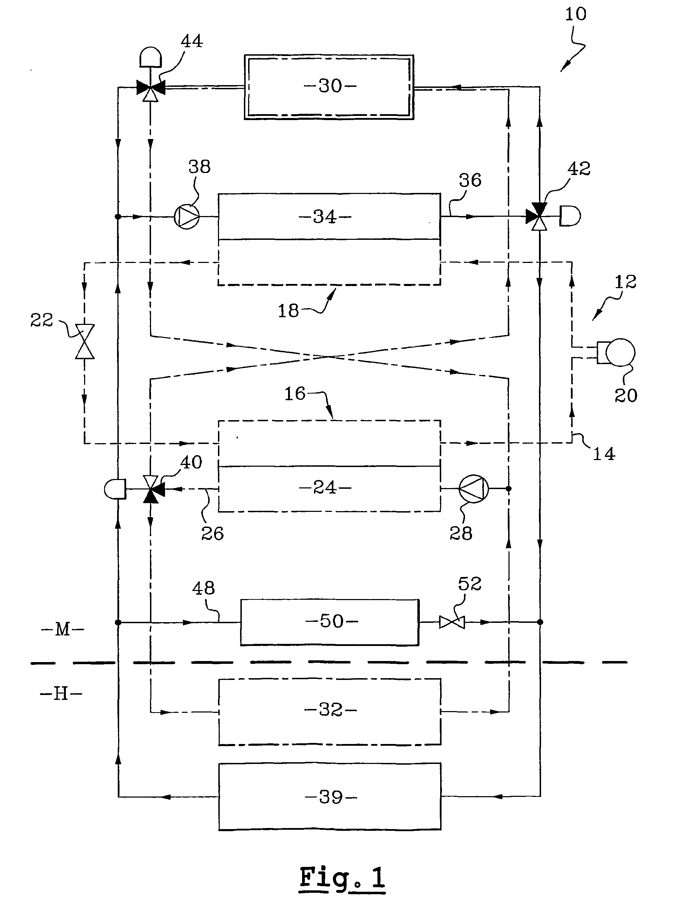

On a représenté sur les figures 1 à 3, un dispositif de régulation thermique pour véhicule automobile selon un premier mode de réalisation de l'invention, désigné par la référence générale 10.

Dans ce qui suit, deux organes sont dits couplés thermiquement entre eux lorsqu'ils échangent de la chaleur entre eux au moyen d'un échangeur thermique approprié.

Le dispositif de régulation thermique 10 comprend une pompe à chaleur 12 comportant un circuit principal 14 de fluide frigorigène, de type à compression, prélevant des calories d'une source froide 16 pour les transférer au moins partiellement vers une source chaude 18.

Les sources froide 16 et chaude 18 sont raccordées entre elles par un compresseur 20 (électrique et/ou mécanique) et une vanne de détente 22. Le fluide frigorigène se vaporise en enlevant de la chaleur à la source froide 16. Le compresseur 20 aspire le fluide vaporisé et le refoule vers la source chaude où il se condense en se refroidissant. La vanne de détente 22 laisse passer le fluide frigorigène liquide vers la source froide 16 en abaissant sa pression. Le sens de circulation du fluide frigorigène dans le circuit 14 est indiqué par des flèches sur la figure 1.

La source froide 16 comporte un premier échangeur thermique 24 fluide frigorigène/liquide caloporteur couplant thermiquement le circuit principal 14 de fluide frigorigène à un premier circuit secondaire 26 de liquide caloporteur. Ce dernier comporte une pompe 28 de mise en circulation du liquide caloporteur, raccordée à l'entrée du premier échangeur thermique 24.

Le premier circuit secondaire 26 peut être raccordé sélectivement à un échangeur thermique dit extérieur 30 et à un échangeur thermique dit froid 32.

Dans l'exemple illustré sur les figures 1 à 3, l'échangeur extérieur 30 est un échangeur liquide caloporteur/air, placé de préférence en face avant dans le compartiment moteur M du véhicule, et l'échangeur froid 32 est un échangeur liquide caloporteur/air, placé dans l'habitacle H du véhicule.

La source chaude 18 comporte un second échangeur thermique 34, fluide frigorigène/liquide caloporteur couplant thermiquement le circuit principal 14 de fluide frigorigène à un second circuit secondaire 36 de liquide caloporteur. Ce dernier comporte une pompe 38 de mise en circulation du liquide caloporteur, raccordée à l'entrée du second échangeur thermique 34.

Le second circuit secondaire 36 peut être raccordé sélectivement à l'échangeur extérieur 30 et à un échangeur thermique dit chaud 39.

Dans l'exemple illustré sur les figures 1 à 3, l'échangeur chaud 39 est un échangeur liquide caloporteur/air placé dans l'habitacle H du véhicule.

Un ventilateur classique, non représenté sur les figures, permet de faire circuler un flux d'air à travers les échangeurs froid 32 et chaud 39.

La pompe à chaleur 12, raccordée aux premier et second échangeurs thermiques 24 , 34 est agencée par exemple dans le compartiment moteur du véhicule.

Le fluide frigorigène circulant dans le circuit principal est d'un type classique. Ce fluide frigorigène est choisi par exemple parmi un dérivé chloré et fluoré du méthane ou de l'éthane (Fréon), un hydrocarbure, l'ammoniac ou le dioxyde de carbone. Le liquide caloporteur circulant dans le premier 26 ou second 36 circuit secondaire est de préférence un mélange d'eau et d'antigel (glycol).

Le raccordement des deux circuits secondaires 26, 36 de liquide caloporteur, respectivement aux échangeurs extérieur 30, froid 32, et chaud 39, est réalisé au moyen d'une vanne trois voies 40 du premier circuit secondaire, d'une vanne trois voies 42 du second circuit secondaire et d'une vanne trois voies 44 commune aux deux circuits secondaires.

La vanne trois voies 40 du premier circuit secondaire 26 est raccordée à la sortie du premier échangeur thermique 24 fluide frigorigène/liquide caloporteur de la source froide, à l'entrée de l'échangeur extérieur 30 et à l'entrée de l'échangeur froid 32.

La vanne 42 du second circuit secondaire 36 est raccordée à la sortie du second échangeur thermique 34 fluide frigorigène/liquide caloporteur de la source chaude, à l'entrée de l'échangeur extérieur 30 et à l'entrée de l'échangeur chaud 39.

La vanne 44, commune aux premier 26 et second 36 circuits secondaires de liquide caloporteur est raccordée à l'entrée du premier échangeur thermique 24 fluide frigorigène/liquide caloporteur de la source froide, à l'entrée du second échangeur thermique 34 fluide frigorigène/liquide caloporteur de la source chaude et à la sortie de l'échangeur extérieur 30.

Les vannes 40 à 44 sont commandées par des moyens classiques électriques, mécaniques, thermomécaniques ou pneumatiques.

L'échangeur chaud 39 est susceptible de restituer à l'habitacle des calories provenant du liquide de refroidissement du moteur du véhicule.

A cet effet, l'échangeur chaud 39 est raccordé à une branche 48 d'un circuit de liquide de refroidissement du moteur thermique 50 du véhicule. Ce dernier est bien entendu agencé dans le compartiment M. L'extrémité aval de la branche 48 est raccordée à une entrée de liquide caloporteur de l'échangeur chaud 39. L'extrémité amont de la branche 48 est raccordée à une sortie de liquide caloporteur de l'échangeur chaud 39. Le cas échéant, une vanne 52 permet de régler le débit de liquide de refroidissement circulant dans l'échangeur chaud 39, en provenance de l'extrémité amont de la branche 48.

On peut ainsi réchauffer l'habitacle au moyen de calories provenant du circuit de refroidissement du moteur en utilisant l'échangeur chaud 39, sans recourir à un échangeur additionnel spécifique au circuit de refroidissement.

La figure 1 illustre la configuration du dispositif de régulation thermique 10 en mode de réfrigération de l'habitacle du véhicule. Dans ce cas, les vannes 40 à 44 sont réglées de manière à raccorder le premier circuit secondaire 26 de liquide caloporteur à l'échangeur froid 32 et le second circuit secondaire 36 de liquide caloporteur à l'échangeur extérieur 30.

Le liquide caloporteur du premier circuit secondaire 26 prélève des calories dans l'habitacle, par l'intermédiaire de l'échangeur froid 32, et les restitue au fluide frigorigène vaporisé, par l'intermédiaire du premier échangeur thermique 24 fluide frigorigène/liquide caloporteur.

Le liquide caloporteur du second circuit secondaire 36 prélève des calories au fluide frigorigène condensé, par l'intermédiaire du second échangeur thermique 34 fluide frigorigène/liquide caloporteur, et les évacue à l'extérieur du véhicule, par l'intermédiaire de l'échangeur extérieur 30.

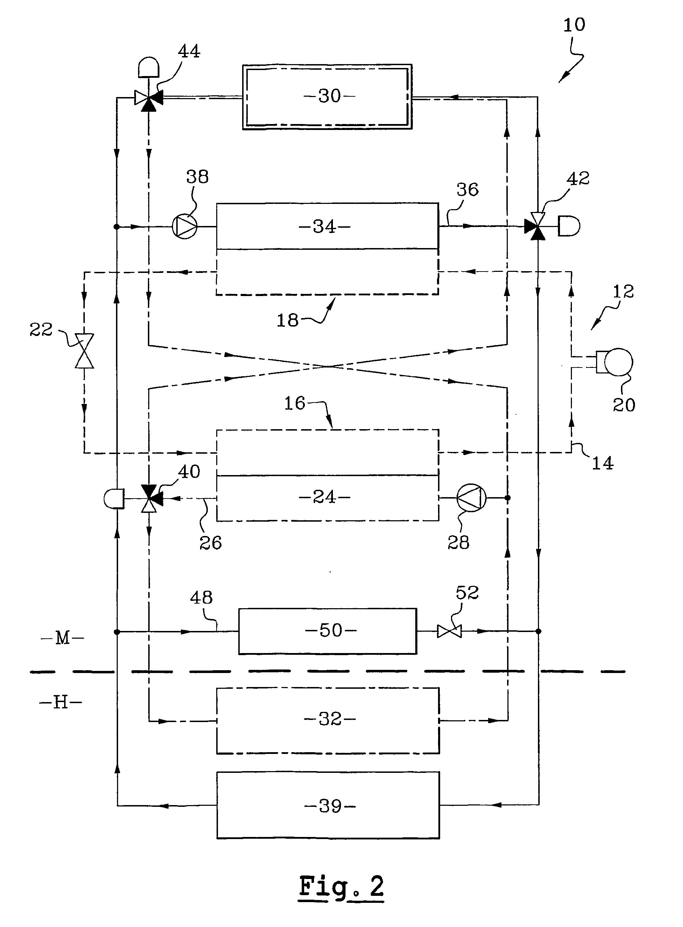

La figure 2 illustre le dispositif 10 dans une première configuration de chauffage de l'habitacle. Dans ce cas, les vannes 40 à 44 sont réglées de manière à raccorder le premier circuit secondaire 26 de liquide caloporteur à l'échangeur extérieur 30 et le second circuit secondaire 36 de liquide caloporteur à l'échangeur chaud 39.

Le liquide caloporteur du premier circuit secondaire 26 prélève des calories à l'extérieur du véhicule, par l'intermédiaire de l'échangeur extérieur 30, et les restitue au fluide frigorigène vaporisé, par l'intermédiaire du premier échangeur thermique 24 fluide frigorigène/liquide caloporteur.

Le liquide caloporteur du second circuit secondaire 36 prélève des calories dans le fluide frigorigène condensé, par l'intermédiaire du second échangeur thermique 34 fluide frigorigène/liquide caloporteur, et les restitue dans l'habitacle, par l'intermédiaire de l'échangeur chaud 39.

Le cas échéant, la vanne 52 est au moins partiellement ouverte pour permettre à l'échangeur chaud 39 de restituer à l'habitacle des calories provenant du liquide de refroidissement du moteur du véhicule.

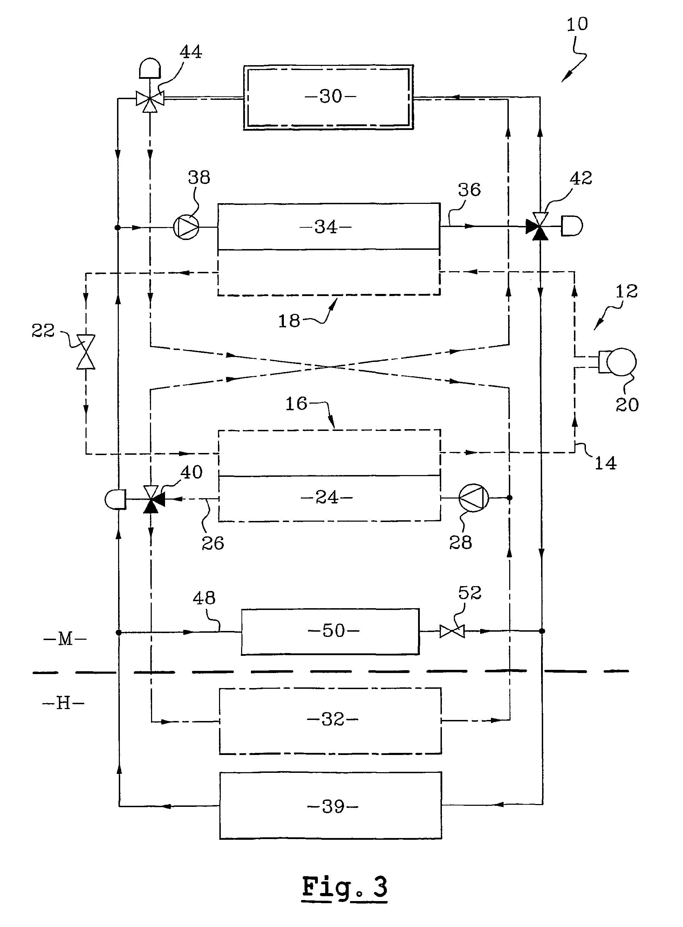

La figure 3 illustre le dispositif 10 dans une seconde configuration de chauffage de l'habitacle. Dans ce cas, les vannes 42 et 44 sont réglées comme sur la figure 2 si bien que le second circuit secondaire 36 de liquide caloporteur est raccordé à l'échangeur chaud 39. Par contre, la vanne 40 est réglée de manière à raccorder le premier circuit secondaire 26 de liquide caloporteur à l'échangeur froid 32.

Le liquide caloporteur du premier circuit secondaire 26 prélève des calories dans l'habitacle (plus particulièrement d'un flux d'air recyclé de l'habitacle comme cela sera décrit par la suite), par l'intermédiaire de l'échangeur froid 32, et les restitue au fluide frigorigène vaporisé, par l'intermédiaire du premier échangeur thermique 24 fluide frigorigène/liquide caloporteur.

Le liquide caloporteur du second circuit secondaire 36 prélève des calories dans le fluide frigorigène condensé, par l'intermédiaire du second échangeur thermique 34 fluide frigorigène/liquide caloporteur, et les restitue dans l'habitacle, par l'intermédiaire de l'échangeur chaud 39.

Dans sa seconde configuration de chauffage, le dispositif 10 permet de prélever à la source froide 16 des calories provenant d'un flux d'air recyclé de l'habitacle.

Comme dans la première configuration de chauffage du dispositif 10 illustrée sur la figure 2, la vanne 52 peut être au moins partiellement ouverte pour permettre à l'échangeur chaud 39 de restituer à l'habitacle des calories provenant du liquide de refroidissement du moteur du véhicule.

Bien entendu, les vannes 40 à 44 peuvent être réglées dans des configurations intermédiaires par rapport aux configurations de réfrigération et de chauffage de l'habitacle illustrées sur les figures 1 à 3, par exemple pour accélérer le chauffage de l'habitacle tout en participant au contrôle du taux d'humidité relative dans celui-ci.

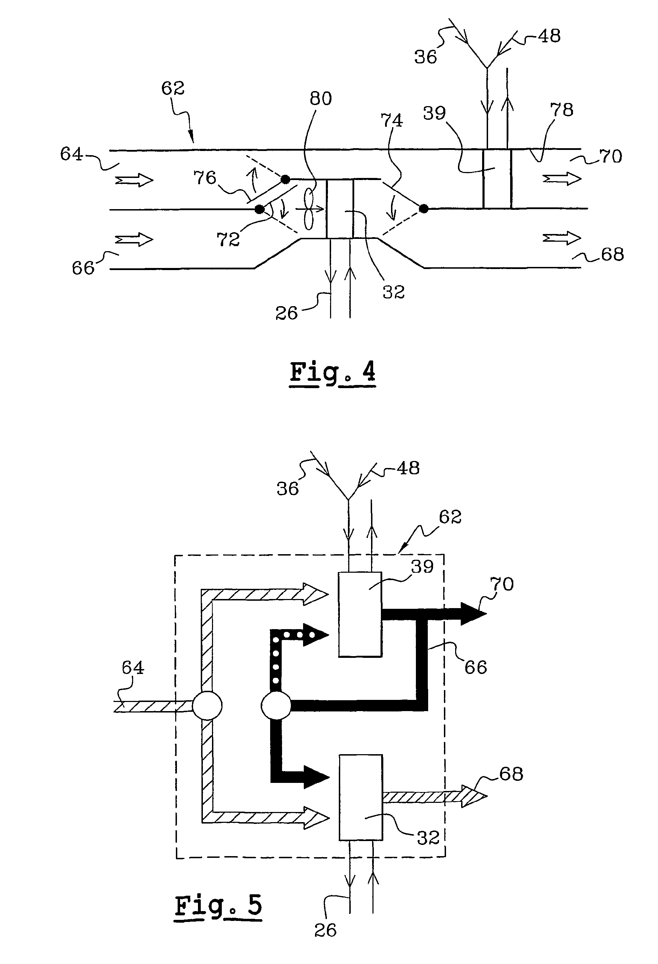

Pour pouvoir réguler la température de l'habitacle en configurant le dispositif 10 comme illustré sur les figures 1 à 3, plus particulièrement comme illustré sur la figure 3 (seconde configuration de chauffage de l'habitacle), les échangeurs froid 32 et chaud 39 sont agencés dans un groupe de climatisation 62 tel qu'illustré sur la figure 4.

Le groupe de climatisation 62, disposé dans l'habitacle, délimite des circuits de flux d'air traversant des échangeurs froid 32 et chaud 39. Les circuits de flux d'air comprennent une entrée d'air extérieur au véhicule, dite entrée d'air extérieur 64, une entrée d'air recyclé de l'habitacle, dite entrée d'air recyclé 66, une sortie d'air vers l'extérieur du véhicule, dite sortie extérieure 68 et une sortie d'air vers l'habitacle, dite sortie habitacle 70.

Les circuits de flux d'air comprennent également des premiers moyens de raccordement de l'entrée d'air recyclé 66 à l'amont de l'échangeur froid 32, comportant par exemple un volet 72, et des deuxièmes moyens de raccordement de l'aval de cet échangeur froid 32 à la sortie extérieure 68, comportant par exemple un volet 74.

Le volet 72 est déplaçable entre deux positions extrêmes de flux d'air recyclé maximal et minimal représentées respectivement en trait plein et en trait interrompu sur la figure 4.

Le volet 74 forme un organe de répartition d'air vers l'amont de l'échangeur chaud 39 et la sortie extérieure 68. Ainsi, le volet 74 est déplaçable entre deux positions extrêmes de flux d'air maximal, d'une part, vers la sortie extérieure 68 et, d'autre part, vers l'amont de l'échangeur chaud 39, représentées respectivement en trait plein et en trait interrompu sur la figure 4.

Les circuits de flux d'air comprennent encore des troisièmes moyens de raccordement de l'entrée d'air extérieur 64 à l'amont de l'échangeur chaud 39, comportant par exemple un volet 76, et des quatrièmes moyens de raccordement de l'aval de l'échangeur chaud 39 à la sortie habitacle 70, comportant un conduit de raccordement 78 muni, le cas échéant, d'un organe de réglage de débit d'air (non représenté).

Le volet 76 forme un organe de répartition d'air vers l'amont de l'échangeur chaud 39 et l'amont de l'échangeur froid 32. Ainsi, le volet 76 est déplaçable entre deux positions extrêmes de flux d'air maximal, d'une part, vers l'amont de l'échangeur chaud 39 et, d'autre part, vers l'amont de l'échangeur froid 32, représentées respectivement en trait plein et en trait interrompu sur la figure 4.

Des moyens d'entraînement d'air tels qu'un dispositif à ventilateur 80, sont agencés en amont de l'échangeur froid 32, comme cela est représenté notamment sur la figure 4, ou en aval de cet échangeur froid 32.

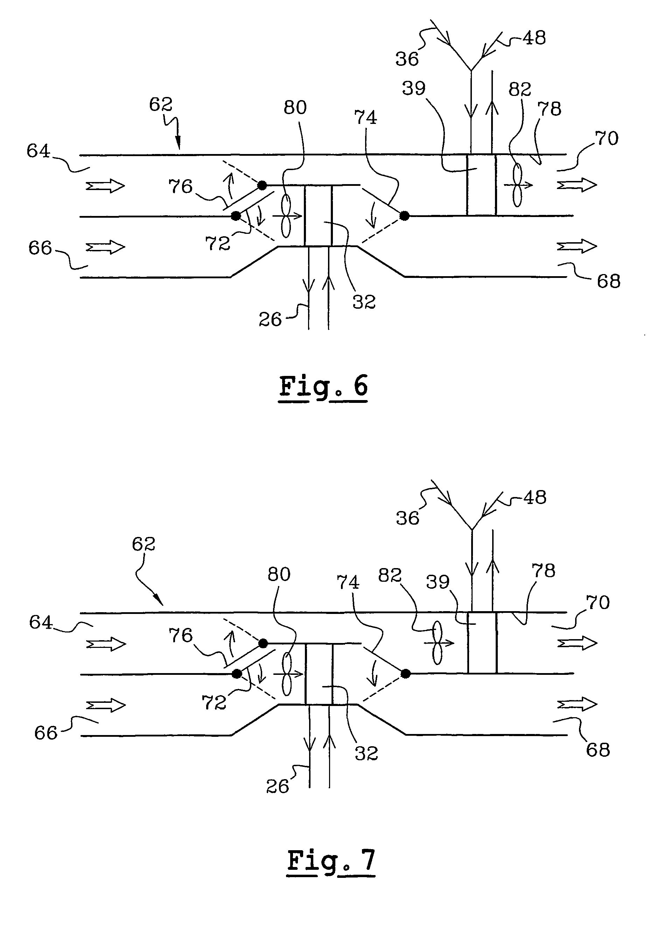

En variante, des moyens supplémentaires d'entraînement d'air tels qu'un dispositif supplémentaire à ventilateur 82, peuvent être agencés en aval (voir figure 6) ou en amont (voir figure 7) de l'échangeur chaud 39.

L'entrée d'air recyclé 66 est reliée de préférence à des orifices de prélèvement d'air dans l'habitacle agencés dans la partie arrière de ce dernier.

La figure 5 illustre le principe de fonctionnement de le groupe de climatisation 62.

Sur cette figure 5, les flux d'air sont représentés par des flèches épaisses. Chaque échangeur de chaleur, froid 32 ou chaud 39, est susceptible d'être alimenté en amont par un flux d'air provenant de l'extérieur du véhicule (flèche à double branche hachurée 64 à gauche sur la figure 5) et par un flux d'air recyclé de l'habitacle (flèche à double branche en trait plein 66 à gauche sur la figure 5).

Le flux d'air en aval de l'échangeur chaud 39 est susceptible d'être envoyé vers l'habitacle (flèche en trait plein 70 à droite sur la figure 5). Le flux d'air en aval de l'échangeur froid 32 est susceptible d'être envoyé vers l'extérieur du véhicule (flèche hachurée 68 à droite de la figure 5) ou, le cas échéant, vers l'amont de l'échangeur chaud 39.

Lorsque le dispositif 10 est configuré de façon à réfrigérer l'habitacle du véhicule, sans réchauffage du flux d'air mais avec une prise d'air à l'extérieur du véhicule, comme cela est représenté sur la figure 1, les volets 72 à 76 sont alors placés par exemple dans leur position illustrée en trait interrompu sur la figure 4. Ainsi, l'échangeur chaud 39 étant désactivé, l'air extérieur circule à travers l'échangeur froid 32 puis est envoyé vers l'habitacle, sans recyclage.

Lorsque le dispositif 10 est dans sa première configuration de chauffage, telle qu'illustrée sur la figure 2, le volet 76 est déplacé par rapport au cas précédent de façon à occuper, par exemple, sa position illustrée en trait plein sur la figure 4. Ainsi, l'air extérieur traverse l'échangeur chaud 39 (qui, dans ce cas, est activé) puis est envoyé vers l'habitacle.

Lorsque le dispositif 10 est dans sa seconde configuration de chauffage, telle qu'illustrée sur la figure 3, les volets 72 à 76 sont placés dans leurs positions illustrées en trait plein sur la figure 4. Ainsi, le flux d'air recyclé de l'habitacle traverse l'échangeur froid 32 puis est envoyé vers l'extérieur du véhicule alors que l'échangeur chaud 39 est traversé par un flux d'air extérieur comme dans le cas de la première configuration de chauffage.

Bien entendu, les volets 72 à 74 peuvent être réglés dans des positions intermédiaires par rapport à celles précisées ci-dessus pour combiner la circulation de différents flux d'air recyclé ou extérieur à travers les échangeurs chaud 39 et froid 32.

La seconde configuration de chauffage du dispositif 10, illustrée sur la figure 3, est particulièrement bien adaptée au chauffage de l'habitacle en saison froide.

En effet, dans cette seconde configuration de chauffage, le premier circuit secondaire 26 est raccordé à l'échangeur froid 32 qui, au contact de l'air recyclé de l'habitacle, n'est pas susceptible de givrer. En effet, l'échangeur froid 32 forme, vis-à-vis du liquide caloporteur circulant dans le premier circuit secondaire 26, une source froide plus chaude que l'échangeur extérieur 30 raccordé au premier circuit secondaire 26 dans la première configuration de chauffage du dispositif 10 illustrée sur la figure 2.

On notera que, lorsque les volets 72 à 76 sont réglés dans leur position illustrée en trait plein sur la figure 4, l'échangeur chaud 39 est traversé uniquement par un flux d'air provenant de l'extérieur du véhicule, non recyclé, ce qui permet de réduire les éventuels risques de formation de buée sur les surfaces vitrées de l'habitacle.

Parmi les avantages de l'invention, on notera que, lorsque le dispositif 10 est dans sa seconde configuration de chauffage, le fonctionnement de la pompe à chaleur 12 est optimisé du fait que l'échangeur froid 32 forme, vis-à-vis du liquide caloporteur circulant dans le premier circuit secondaire 26, une source froide plus chaude que l'échangeur extérieur 30.

De plus, en saison froide, la seconde configuration de chauffage du dispositif 10 permet d'élever la température dans l'habitacle plus rapidement que dans le cas de la première configuration de chauffage du dispositif 10. Cet avantage résulte notamment du fait que l'on prélève à la source froide 16 des calories provenant d'un flux d'air recyclé de l'habitacle dont la température est supérieure à celle de l'air extérieur.

## Revendications

1. Dispositif de régulation thermique pour véhicule automobile, du type comprenant :
- une pompe à chaleur (12) comportant un circuit principal (14) de fluide frigorigène à compression prélevant des calories d'une source froide (16) pour les transférer au moins partiellement vers une source chaude (18),
- la source froide (16) comportant un premier échangeur thermique (24) fluide frigorigène/liquide caloporteur couplant thermiquement le circuit principal (14) de fluide frigorigène à un premier circuit secondaire (26) de liquide caloporteur pouvant être raccordé sélectivement à au moins deux échangeurs thermiques,
- la source chaude (18) comportant un second échangeur thermique (34) fluide frigorigène/liquide caloporteur couplant thermiquement le circuit principal (14) de fluide frigorigène à un second circuit secondaire (36) de liquide caloporteur pouvant être raccordé sélectivement à au moins deux échangeurs thermiques,
**caractérisé en ce que** le premier circuit secondaire (26) peut être raccordé sélectivement à un échangeur thermique dit extérieur (30) et un échangeur thermique dit froid (32), **en ce que** le second circuit secondaire (36) peut être raccordé sélectivement à l'échangeur extérieur (30) et un échangeur thermique dit chaud (39), et **en ce que** le dispositif comporte en outre un groupe de climatisation (62) comprenant des moyens (72) de raccordement d'une entrée d'air recyclé de l'habitacle (66), dite entrée d'air recyclé (66), à l'amont de l'échangeur froid (32).

2. Dispositif selon la revendication 1, **caractérisé en ce que** les échangeurs froid (32) et chaud (39) sont des échangeurs liquide caloporteur/air.

3. Dispositif selon la revendication 2, **caractérisé en ce que** les échangeurs froid (32) et chaud (39) sont agencés dans le groupe de climatisation (62), disposé de préférence dans l'habitacle, délimitant des circuits de flux d'air traversant ces échangeurs froid (32) et chaud (39), les circuits de flux d'air comprenant l'entrée d'air recyclé (66).

4. Dispositif selon la revendication 3, **caractérisé en ce que** les circuits de flux d'air comprennent en outre une sortie d'air vers l'extérieur du véhicule, dite sortie extérieure (68), et des deuxièmes moyens (74) de raccordement de l'aval de cet échangeur froid (32) à la sortie extérieure (68).

5. Dispositif selon la revendication 4, **caractérisé en ce que** les deuxièmes moyens de raccordement comprennent des moyens (74) de répartition d'air vers l'amont de l'échangeur chaud (39) et la sortie extérieure (68).

6. Dispositif selon la revendication 4 ou 5, **caractérisé en ce que** les circuits de flux d'air comprennent une entrée d'air extérieur au véhicule, dite entrée d'air extérieur (64), une sortie d'air vers l'habitacle, dite sortie habitacle (70), des troisièmes moyens (76) de raccordement de l'entrée d'air extérieur (64) à l'amont de l'échangeur chaud (39) et des quatrièmes moyens (78) de raccordement de l'aval de l'échangeur chaud (39) à la sortie habitacle (70).

7. Dispositif selon la revendication 6, **caractérisé en ce que** les troisièmes moyens de raccordement comprennent des moyens (76) de répartition d'air vers l'amont de l'échangeur chaud (39) et l'amont de l'échangeur froid (32).

8. Dispositif selon l'une quelconque des revendications 3 à 7, **caractérisé en ce que** le groupe de climatisation (62) comprend des moyens d'entraînement d'air (80) agencés en amont ou en aval de l'échangeur froid (32).

9. Dispositif selon l'une quelconque des revendications 3 à 8, **caractérisé en ce que** le groupe de climatisation (62) comprend des moyens d'entraînement d'air (82) agencés en amont ou en aval de l'échangeur chaud (39).

## Claims

1. Temperature control device for motor vehicle, of the type comprising:
- a heat pump (12) including a main circuit (14) of refrigerant under compression taking heat from a cold source (16) to transfer it at least partially to a hot source (18),
- the cold source (16) including a first refrigerant/heat transfer fluid heat exchanger (24) thermally coupling the main refrigerant circuit (14) to a first secondary heat transfer fluid circuit (26) which can be connected selectively to at least two heat exchangers,
- the hot source (18) including a second refrigerant/heat transfer fluid heat exchanger (34) thermally coupling the main refrigerant circuit (14) to a second secondary heat transfer fluid circuit (36) which can be connected selectively to at least two heat exchangers,
**characterised in that** the first secondary circuit (26) can be connected selectively to an "external" heat exchanger (30) and a "cold" heat exchanger (32), **in that** the second secondary circuit (36) can be connected selectively to the external exchanger (30) and a "hot" heat exchanger (39), and **in that** the device also includes an air-conditioning unit (62) comprising means (72) for connecting a passenger compartment recycled air inlet (66), called the recycled air inlet (66), upstream from the cold exchanger (32).

2. Device according to claim 1, **characterised in that** the cold (32) and hot (39) exchangers are heat transfer fluid/air exchangers.

3. Device according to claim 2, **characterised in that** the cold (32) and hot (39) exchangers are arranged in the air-conditioning unit (62), placed preferably in the passenger compartment, delimiting air flow circuits crossing these cold (32) and hot (39) exchangers, the air flow circuits comprising the recycled air inlet (66).

4. Device according to claim 3, **characterised in that** the air flow circuits also comprise an air outlet to the outside of the vehicle, called the external outlet (68), and second means (74) for connecting a point downstream from this cold exchanger (32) to the external outlet (68).

5. Device according to claim 4, **characterised in that** the second connection means comprise means (74) for distributing air to a point upstream from the hot exchanger (39) and to the external outlet (68).

6. Device according to claim 4 or 5, **characterised in that** the air flow circuits comprise an air inlet outside the vehicle, called the external air inlet (64), an air outlet to the passenger compartment, called the passenger compartment outlet (70), third means (76) for connecting the external air inlet (64) to a point upstream from the hot exchanger (39) and fourth means (78) for connecting a point downstream from the hot exchanger (39) to the passenger compartment outlet (70).

7. Device according to claim 6, **characterised in that** the third connection means comprise means (76) for distributing air to points upstream from the hot exchanger (39) and from the cold exchanger (32).

8. Device according to any of claims 3 to 7,
**characterised in that** the air-conditioning unit (62) comprises air entrainment means (80) arranged upstream or downstream from the cold exchanger (32).

9. Device according to any of claims 3 to 8,
**characterised in that** the air-conditioning unit (62) comprises air entrainment means (82) arranged upstream or downstream from the hot exchanger (39).

## Patentansprüche

1. Vorrichtung zur thermischen Regelung für ein Kraftfahrzeug, umfassend:
- eine Wärmepumpe (12), die einen Kompressionskältemittel-Hauptkreislauf (14) aufweist, der einem kalten Reservoir (16) Kalorien entzieht, um sie zumindest teilweise zu einem warmen Reservoir (18) zu transferieren,
- wobei das kalte Reservoir (16) einen ersten Kältemittel/Wärmeträgerflüssigkeits-Wärmetauscher (24) aufweist, der den Kältemittel-Hauptkreislauf (14) thermisch an einen ersten Wärmeträgerflüssigkeits-Nebenkreislauf (26) koppelt, der selektiv an zumindest zwei Wärmetauscher angeschlossen werden kann,
- wobei das warme Reservoir (18) einen zweiten Kältemittel/Wärmeträgerflüssigkeits-Wärmetauscher (34) aufweist, der den Kältemittel-Hauptkreislauf (14) thermisch an einen zweiten Wärmeträgerflüssigkeits-Nebenkreislauf (36) koppelt, der selektiv an zumindest zwei Wärmetauscher angeschlossen werden kann,
**dadurch gekennzeichnet, dass** der erste Nebenkreislauf (26) selektiv an einen Wärmetauscher, genannt äußerer Wärmetauscher (30), und an einen Wärmetauscher, genannt kalter Wärmetauscher (32), angeschlossen werden kann, dass der zweite Nebenkreislauf (36) selektiv an den äußeren Tauscher (30) und an einen Wärmetauscher, genannt warmer Wärmetauscher (39), angeschlossen werden kann, und dass die Vorrichtung weiterhin eine Klimatisierungsgruppe (62) aufweist, welche Mittel (72) zum Anschluss eines Einlasses (66) für Umluft des Fahrzeuginnenraums, genannt Umlufteinlass (66), an die Anströmseite des kalten Tauschers (32) umfasst.

2. Vorrichtung nach Anspruch 1, **dadurch gekennzeichnet, dass** der kalte (32) und der warme (39) Tauscher Wärmeträgerflüssigkeit/Luft-Tauscher sind.

3. Vorrichtung nach Anspruch 2, **dadurch gekennzeichnet, dass** der kalte (32) und der warme (39) Tauscher in der, bevorzugt im Fahrzeuginnenraum eingerichteten, Klimatisierungsgruppe (62) angeordnet sind, welche Luftstromkreisläufe begrenzt, die diesen kalten (32) und diesen warmen (39) Tauscher durchqueren, wobei die Luftstromkreisläufe den Umlufteinlass (66) umfassen.

4. Vorrichtung nach Anspruch 3, **dadurch gekennzeichnet, dass** die Luftstromkreisläufe weiterhin einen Auslass für Luft zum Äußeren des Fahrzeugs, genannt Außenauslass (68), und zweite Mittel (74) zum Anschluss der Abströmseite dieses kalten Tauschers (32) an den Außenauslass (68) umfassen.

5. Vorrichtung nach Anspruch 4, **dadurch gekennzeichnet, dass** die zweiten Anschlussmittel Mittel (74) zur Verteilung von Luft zur Anströmseite des warmen Tauschers (39) und zum Außenauslass (68) hin umfassen.

6. Vorrichtung nach Anspruch 4 oder 5, **dadurch gekennzeichnet, dass** die Luftstromkreisläufe einen Einlass für Luft außerhalb des Fahrzeugs umfassen, genannt Außenlufteinlass (64), einen Auslass für Luft in Richtung des Fahrzeuginnenraums, genannt Fahrzeuginnenraumauslass (70), dritte Mittel (76) zum Anschluss des Außenlufteinlasses (64) an die Anströmseite des warmen Tauschers (39) und vierte Mittel (78) zum Anschluss der Abströmseite des warmen Tauschers (39) an den Fahrzeuginnenraumauslass (70).

7. Vorrichtung nach Anspruch 6, **dadurch gekennzeichnet, dass** die dritten Anschlussmittel Mittel (76) zur Verteilung von Luft in Richtung der Anströmseite des warmen Tauschers (39) und in Richtung der Anströmseite des kalten Tauschers (32) umfassen.

8. Vorrichtung nach einem der Ansprüche 3 bis 7, **dadurch gekennzeichnet, dass** die Klimatisierungsgruppe (62) Mittel (80) zum Bewegen von Luft umfasst, die dem kalten Tauscher (32) vor- oder nachgelagert sind.

9. Vorrichtung nach einem der Ansprüche 3 bis 8, **dadurch gekennzeichnet, dass** die Klimatisierungsgruppe (62) Mittel (82) zum Bewegen von Luft umfasst, die dem warmen Tauscher (39) vor- oder nachgelagert sind.
